# EUROPEAN PATENT SPECIFICATION

(11) **EP 2 772 897 B1**
(45) Date of publication and mention of the grant of the patent: **25.05.2016**
(21) Application number: 14156717.2
(22) Date of filing: 26.02.2014
(51) Int. Cl.: G09B 23/28, G09B 23/30

(54) **Medical training apparatus for catheterization**
Medizinisches Trainingsgerät für Katheterisierung
Appareil de formation médicale au cathétérisme

(30) Priority: 01.03.2013 JP 2013041154
(43) Date of publication of application: 03.09.2014
(73) Proprietor: Terumo Kabushiki Kaisha, Tokyo (JP)
(72) Inventor: Ishimori, Motofumi, Kanagawa (JP); Asai, Satoshi, Tokyo (JP); Ozaki, Kouji, Tokyo (JP)
(74) Representative: Casalonga

(56) References cited:
- WO-A1-2005/081205
- DE-U1-202004 006 035
- JP-A- 2012 068 505
- JP-A- 2012 203 016
- US-A- 4 126 789
- US-A- 6 062 866
- US-A1- 2006 027 741

## Description

### BACKGROUND

### Technical Field

The present application relates to a training apparatus for performing training of an interventional procedure inside a living body lumen-,

### Related Art

In the field of treatment for the living body lumen, the interventional procedure (catheter procedure) is performed, in which a lesion area is treated by introducing a medical device for the living body lumen, such as a catheter. Therefore, various training apparatuses are proposed for the purpose of mastering and improving the catheter procedure (see JP4320450 B1, JP 05-50477 Y, DE 20 2004 006035 U1 and US 4 126 789 A, for example)

A carotid artery simulation model (training apparatus) disclosed in JP 4320450 B1 includes, as simulated bodies, simulated blood vessels (femoral artery conduit, abdominal aorta conduit, thoracic aorta conduit, aortic arch conduit, ascending aortic conduit, right coronary artery conduit, left coronary artery tract, conduit) running between a femoral artery and a coronary artery in order to perform training for percutaneous transluminal coronary angioplasty (PTCA). The respective simulated blood vessels are formed of material based on silicon resin, thereby providing a user with a feeling close to actual introduction of the catheter into a blood vessel.

Additionally, JP 05-50477 Y discloses a cardiovascular model (training apparatus) including a simulated heart and simulated blood vessels connected to the simulated heart as the simulated bodies. In this training apparatus, reflectance at an inner wall of the simulated blood vessel is suppressed for endoscope operation training, and further, since simulated blood (liquid) is injected into the simulated blood vessel, the training close to reality can be performed.

### SUMMARY

Incidentally, this type of the training apparatus is required to have a structure in which the simulated blood (liquid) flows inside the simulated blood vessel (simulated body) in the same manner as an actual living body organ in order to practice the catheter procedure closer to reality although neither JP 4320450 B1 nor JP 05-50477 Y disclose such technology. However, the structure in which the liquid flows inside the training apparatus is complex, and it takes time and labor to perform preparation and cleanup for the training.

Further, the training apparatus is required to be operable with X-ray photography during the training. More specifically, the catheter procedure training closer to reality can be performed when the simulated body and the catheter are displayed by the X-ray photography relatively indistinct. Therefore, in the case of performing the X-ray photography, the training apparatus is required to have a structure in which the simulated body is displayed indistinct.

Further, during the training with the use of the X-ray photography, a position of the catheter and a form of the simulated body are confirmed after discharging the X-ray contrast medium (used subject) from the catheter. However, when the training with the use of the X-ray contrast medium is continuously performed, there is a problem in that the simulated body is displayed relatively distinct because of the remaining X-ray contrast medium.

US4126789 (A) discloses an X-ray phantom having a radiolucent sealed case contains sea water, a floatation chamber sealed against the sea water and having an exterior opening, and various X-ray calibration targets for illustration of a variety of densities and shapes for radiographic study. JP2012203016 (A) provides a simulated human body system which periodically opens/closes the opening/closing valve of an electromagnetic valve while sending a simulated blood to a simulated organ by an artificial cardiopulmonary pump of a circulation part, and discharges the simulated blood inside the simulated organ to a reservoir by using a drop □H. A simulated heart expands an outer shell by increasing pressure in a storage space and the storage amount of the simulated blood when the opening/closing valve of the electromagnetic valve is opened, and contracts the outer shell by reducing the pressure in the storage space and the storage amount of the simulated blood when the opening/closing valve of the electromagnetic valve is closed. Thus, the simulated heart repetitively expands and contracts with the periodic opening/closing of the opening/closing valve in the electromagnetic valve, thereby to reproduce a motion similar to a pulsation in a human body.

The present invention is made in view of the above situation, and an object of the present invention is to provide a training apparatus in which the training closer to an actual interventional procedure can be effectively and successfully performed by simply configuring an environment where the liquid circulates, and by providing a structure in which the training based on X-ray photography can be performed.

To achieve the above-mentioned object, a training apparatus according to the present invention includes all the features of claim 1.

With the above configuration, the environment close to the actual interventional procedure can be simply configured because the training apparatus has the structure in which the liquid is stored and the simulated body is contained inside the space of the container, and the circulation unit circulates the liquid. With this configuration, the training apparatus allows a trainee to effectively perform preparation and cleanup associated with the training.

Further, by submerging at least a part of the simulated body in the stored liquid, distribution of the liquid inside the space containing the simulated body can be substantially uniform. This makes it possible to display the simulated body indistinct in the substantially same manner as a radiographic image acquired in the actual interventional procedure when the radiographic image of the simulated body is obtained by radiography. Thus, the training closer to reality can be performed.

Moreover, the used subject can be immediately discharged to the space via the discharge unit of the simulated body even when a used subject is delivered from the device inserted into the simulated body. Therefore, in the case where the used subject is an X-ray contrast medium, the contrast medium remaining inside the simulated body can be reduced and the training can be continuously performed. Accordingly, the user can perform the training closer to reality with the training apparatus, and can master (improve) the interventional procedure successfully.

Additionally, the circulation unit may include an upstream-side valve configured to cyclically change a flow amount of the liquid to be supplied to the supply unit.

Thus, since the circulation unit includes the upstream-side valve to supply the liquid, cyclically changing a supply amount of the liquid, it becomes possible to actuate the simulated body based on the flow amount of the liquid. For example, in the case where the treating part is a simulated heart (heart model), the heart model can be pulsated in accordance with the change of the liquid supply amount.

Further, the circulation unit preferably includes suction tubing where the liquid inside the space or the liquid inside the discharge unit can flow, and a pump connected to the suction tubing and configured to suction the liquid by applying negative pressure to the suction tubing and supply the liquid to the supply unit.

Thus, since the circulation unit includes the suction tubing and the pump, the liquid inside the space can be smoothly circulated. Also, although a reservoir for storing the liquid is generally required in the structure where the heart model is pulsated, the container can be substituted for the reservoir, thereby more simplifying the apparatus structure.

Further, the circulation unit may include a downstream-side valve configured to cyclically change a flow amount of the liquid flowing in the suction tubing.

Thus, since the circulation unit includes the downstream-side valve configured to change the flow amount of the liquid, the simulated body can be pulsated based on the flow amount of the liquid flowing in the suction tubing by suction force of the pump. Therefore, for example, the heart model can pulsate more similar to reality by alternately opening and closing the upstream-side valve and the downstream-side valve.

Furthermore, the discharge unit may include discharge tubing directly connected to the treating part, and the discharge tubing may be detachably connected to the suction tubing.

Thus, since the discharge tubing is detachably connected to the suction tubing, the liquid can flow more smoothly by connecting the discharge tubing to the suction tubing during the training depending on necessity.

Here, note that the container may be formed transparent or translucent so that the simulated body can be visually confirmed, and also may be formed as a human body model simulating a part or an entire part of an actual human body.

Thus, since the container is formed as the human body model that simulates a part or the entire part of a human body, the training closer to reality can be performed. Also, in the case where the container is made transparent or translucent, a position of the catheter can be visually confirmed during the training, and the training with high versatility can be achieved.

Further, the container preferably includes an opening on an upper surface thereof so that the space can communicate with the outside through the opening in a placed state.

Thus, since the training apparatus has the opening provided on the upper surface of the container, the liquid can be stored in the space, and the air inside the space and the simulated body can be discharged through the opening. Therefore, time required for preparation and cleanup associated with the training apparatus can be considerably reduced.

According to the present invention, the training closer to the actual interventional procedure can be effectively and successfully performed because the environment where the liquid circulates is simply configured and the structure in which the training based on X-ray photography can also be performed.

### BRIEF DESCRIPTION OF DRAWINGS

FIG. 1 is a partial perspective view illustrating an entire configuration of a training apparatus according to an embodiment of the present invention;
FIG. 2 is a schematic diagram illustrating a side view of the training apparatus in FIG. 1;
FIG. 3 is an explanatory diagram schematically illustrating a water circuit in the training apparatus in FIG. 1;
FIG. 4 is an explanatory diagram illustrating an enlarged simulated heart of the training apparatus in FIG. 1; and
FIG. 5 is an explanatory diagram schematically illustrating a water circuit in training apparatus according to a modified embodiment.

### DETAILED DESCRIPTION

A training apparatus according to an embodiment of the present invention will be described below in detail with reference to the attached drawings, providing preferred embodiments.

The training apparatus is used for training of an interventional procedure inside a living body lumen (procedure whereby a medical device is delivered to a lesion area through inside of the living body lumen). Particularly, the training apparatus according to the present embodiment is configured for PTCA training, which is a training in which a constriction at a coronary artery inside a human body is treated with a catheter not illustrated.

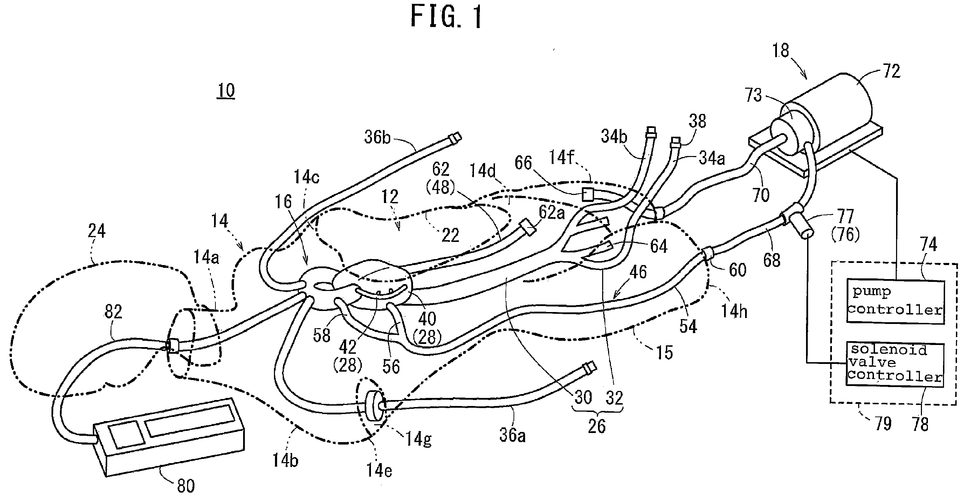

As illustrated in FIG. 1, the training apparatus 10 includes a mannequin 14 (human body model) simulating a human body appearance and having a space 12 inside thereof, and a simulated body 16 contained inside the space 12, to which the catheter is actually inserted and delivered. Further, the training apparatus 10 is configured to supply and discharge water W (liquid), namely simulated blood, to and from the simulated body 16 so that the training closer to reality can be performed. For that, a circulation unit 18 configured to circulate the water W is provided outside the mannequin 14.

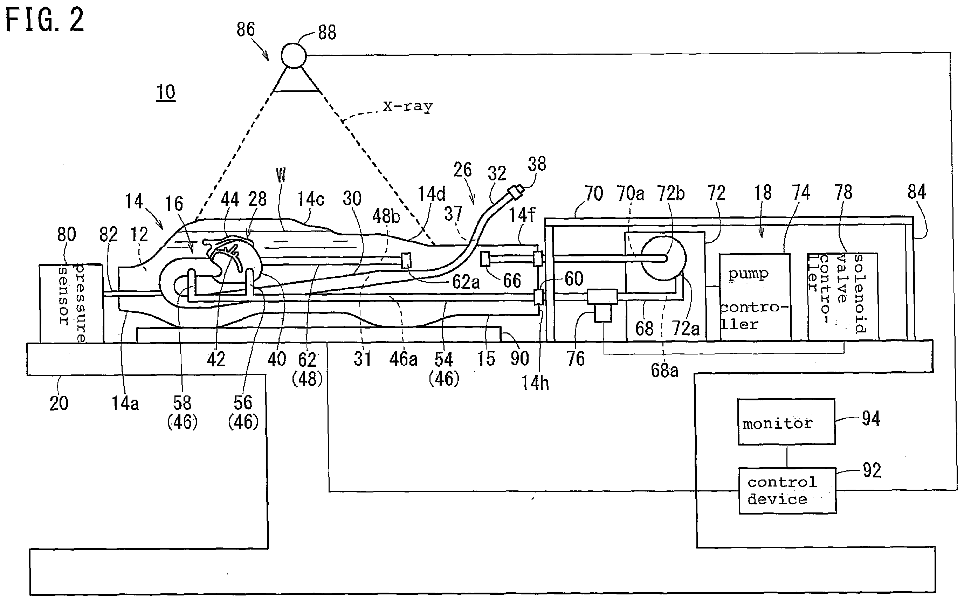

The mannequin 14 does not simulate an entire human body but is formed to have a simulated human body from a neck part 14a to femoral region 14f which is necessary for the PTCA training. More specifically, the mannequin 14 has an outer form of the human body simulating the neck part 14a, shoulder parts 14b, a chest part 14c, an abdomen 14d, partial upper arms 14e, and partial femoral region 14f. The mannequin 14 is placed facing upward on an operation table 20 (see FIG. 2) during use. Since the mannequin 14 does not have leg parts below the femoral region 14f, the training apparatus 10 is space-saving, whereby the circulation unit 18 can be easily placed with the mannequin 14 on the operation table 20. Needless to mention, the mannequin 14 may simulate the entire part of the human body.

The mannequin 14 is configured as a container for storing the water W in the space 12 as illustrated in FIG. 2, and the space 12 is shaped along the forms of the respective human body parts (in external appearance). Therefore, a wall 15 constituting the mannequin 14 is formed to have sufficient thickness and hard property so that the water W can be stably stored.

As illustrated in FIGS. 1 and 2, the mannequin 14 includes a relatively large opening 22 communicating with the space 12 on an upper surface (surface facing upward) of the chest part 14c. With this structure, the water W can be easily stored in the space 12 from the outside through the opening 22 after the mannequin 14 is placed on the operation table 20.

Here, in the training apparatus 10, a surgical cover not illustrated is put over the mannequin 14 during the training in the same manner as the actual procedure. Therefore, even though the opening 22 is provided on the mannequin 14, a state in which a patient lying on one's back on the operation table 20 can be reproduced without sense of incongruity during the training because of the cover put over the mannequin 14. Note that a mask 24 may be attached to the neck part 14a of the mannequin 14. The user can recognize the posture and the like of the mannequin 14 by checking the mask 24 exposed from the cover even when the cover is used.

Needless to say, the training apparatus 10 may be used without the cover. In this case, the training can be performed, visually confirming a position of the catheter with respect to the simulated body 16. Accordingly, the mannequin 14 is preferably formed of a material transparent (or translucent) through which the simulated body 16 contained inside the space 12 can be visually confirmed. The material forming the mannequin 14 is not particularly limited. However, examples are various kinds of resin materials including polyolefin such as polyethylene, polypropylene and ethylene-vinyl acetate copolymer, polyvinyl chloride, polybutadiene, polyamide, polyester, polycarbonate, and polystyrene.

The simulated body 16 contained inside the space 12 of the mannequin 14 includes a blood vessel model 26 (guide tubing) simulating the blood vessels inside the human body and capable of delivering the catheter inside thereof, a heart model 28 (treating part) simulating the heart inside the human body and connected to the blood vessel model 26 for the PTCA training. The blood vessel model 26 and the heart model 28 are disposed in appropriate positions of the mannequin 14 so as to be positioned substantially same as the actual living body organs.

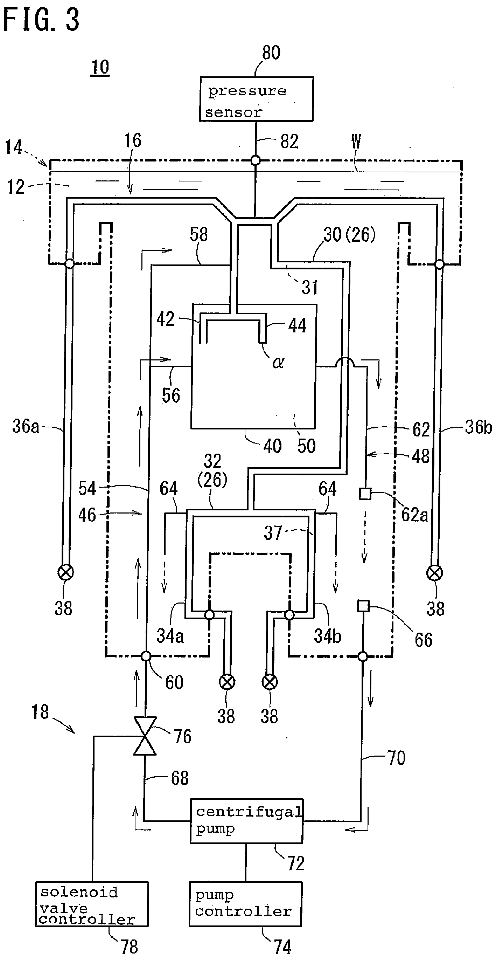

As illustrated in FIGS. 1 to 3, the blood vessel model 26 is formed of paths through which the catheter is delivered in the actual PTCA, and includes a aorta model 30 connected to the heart model 28 and an artery model 32 connected to the aorta model 30.

The aorta model 30 is formed simulating (to be closed to) the aorta inside the human body. More specifically, the aorta model is formed of a tube simulating an ascending aorta directed from the heart to a head part, an aortic arch connected from the ascending aorta, curved approximately at the angle 180 degrees and facing in the direction of the leg parts, a descending aorta connected to the aortic arch and directed to the leg parts, a thoracic aorta and an abdominal aorta connected to the descending aorta and further directed to the leg parts. An aorta-side lumen 31 is formed in an axial direction inside the aorta model 30. The aorta-side lumen 31 preferably has an inner diameter which is relatively large, conforming to each section of the actual aorta in order to provide the training environment close to reality.

The artery model 32 is formed of a plurality of tubes thinner than the aorta model 30. More specifically, the artery model 32 includes two femoral arterial lines (right femoral arterial line 34a and left femoral arterial line 34b) simulating a common iliac artery (external iliac arteries) and the femoral artery inside the human body, two brachial arterial lines (right brachial arterial line 36a and left brachial arterial line 36b) simulating a brachiocephalic artery, a right subclavian artery, a left subclavian artery, brachial arteries, etc. inside the human body. Inside the right femoral arterial line 34a, left femoral arterial line 34b, right brachial arterial line 36a, and left brachial arterial line 36b, arterial-side lumens 37 having an inner diameter sufficient to deliver the catheter are formed.

The left femoral arterial line 34b and right femoral arterial line 34a are connected to an end portion of the aorta model 30 on the side closer to the femoral region 14f (on a distal side of the heart model 28) and bifurcated. The femoral arterial lines 34a and 34b detour to the inside of the abdomen 14d of the mannequin 14 and reach the inside of the femoral region 14f (region corresponding to a groin), and are exposed to the outside of the mannequin 14 from the femoral region 14f. An insertion terminal 38 is disposed at an end portion of each of the femoral arterial lines 34a and 34b exposed outside. The insertion terminal 38 includes a valve section not illustrated, which allows the catheter to be inserted into the arterial-side lumen 37 and prevents the water W flowing through the arterial-side lumen 37 from leaking.

The left brachial arterial line 36b and right brachial arterial line 36a have end portions connected to the curved portion of the aorta model 30, and detour to the inside of the shoulder parts 14b of the mannequin 14 from these end portions, and reach a cut surface 14g of the upper arm 14e, and are exposed to the outside from the cut surface 14g. The insertion terminal 38 is provided at the end portion of each of the brachial arterial lines 36a and 36b exposed outside, same as each of the femoral arterial lines 34a and 34b.

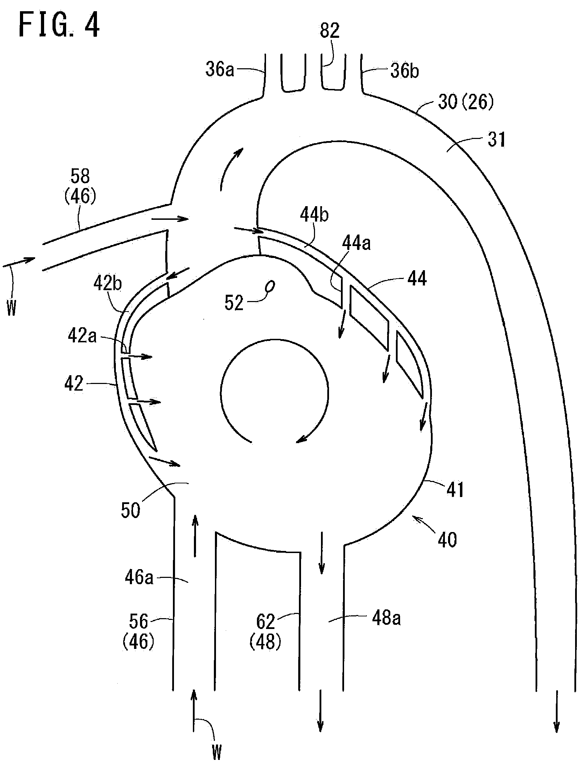

On the other hand, the heart model 28 is configured as a treating part to which the catheter is delivered through the above-described blood vessel model 26, and prescribed treatment is applied. As illustrated in FIGS. 1 and 4, the heart model 28 includes a simulated heart 40 simulating the heart inside the human body, a right coronary arterial line 42 simulating a right coronary artery, and a left coronary arterial line 44 simulating a left coronary artery.

The simulated heart 40 is formed of a flexible wall portion 41 and has a distorted spherical shape simulating (similar to) the heart inside the human body. One end portion of the aorta model 30 is connected to a prescribed position of the simulated heart 40 (upper part in FIG. 4). Further, the right coronary arterial line 42 and left coronary arterial line 44 are connected to the wall portion 41 of the simulated heart 40 while a supply tube 46 (supply unit) and a discharge tube 48 (discharge unit) are also connected.

The simulated heart 40 includes a flow chamber 50 formed in a hollow with the wall portion 41, different from the inside of the actual heart (more specifically, formed of a left atria, a right atria, a left ventricle and a right ventricle). The water W is supplied to the flow chamber 50 from the right coronary arterial line 42, left coronary arterial line 44 and supply tube 46, temporarily stored inside the flow chamber, and flows inside the chamber and then is discharged from the discharge tube 48.

The simulated heart 40 expands and contracts (pulsates) in accordance with a supply amount of the water W supplied to the flow chamber 50. The flow chamber 50 does not directly communicate with the aorta-side lumen 31 of the aorta model 30 as illustrated in FIG. 4, but communicates with the aorta-side lumen 31 through the right coronary arterial line 42 and the left coronary arterial line 44. Therefore, the water W flowing inside the flow chamber 50 can be separated from the water W flowing in the aorta-side lumen 31, and the simulated heart 40 can successfully expand and contract. Needless to say, a hole not illustrated may be disposed on the wall portion 41 between the aorta-side lumen 31 and the flow chamber 50 so that inner pressure of the flow chamber 50 can be adjusted by performing the communication between the aorta-side lumen 31 and the flow chamber 50 via the hole.

Also, a small-diameter hole 52 allowing the flow chamber 50 to communicate with the outside (space 12) of the simulated heart 40 may be disposed on the wall portion 41 of the simulated heart 40. With this structure, the water W and air can be timely discharged to the space 12 from the flow chamber 50 through the hole 52.

The right coronary arterial line 42 and left coronary arterial line 44 are tubes disposed along outer side of the simulated heart 40, and include a plurality of branch tubes 42a and 44a connected to the wall portion 41 of the simulated heart 40. Communication passages 42b and 44b where the water W can flow are formed in the inside of the respective coronary arterial lines 42 and 44 (including the branch tubes 42a and 44a). The communication passages 42b and 44b are in communication with the flow chamber 50 via the branch tubes 42a and 44a while being in communication with the aorta-side lumen 31 via the end portions of the right coronary arterial line 42 and the left coronary arterial line 44 which are connected to the aorta model 30.

Preferably, the simulated body 16 (blood vessel model 26 and heart model 28) thus configured is rigid and flexible substantially same as the actual living body organ, and further is transparent (or translucent) so that the catheter can be visually confirmed. The material constituting the simulated body 16 is not specifically limited; however, for example, one or combination of two or more of following materials may be used: elastomer-based material such as silicone rubber (silicone elastomer) and thermosetting polyurethane elastomer, gel such as silicone hydrogel, PVA hydrogel and gelatin, thermosetting resin such as silicone resin, epoxy resin, polyurethane, unsaturated polyester, phenol resin and urea resin, or a thermoplastic resin such as polymethyl methacrylate, and so on.

Note that the simulated body 16 is not limited to the above-described blood vessel model 26 (aorta model 30 and artery model 32), heart model 28, etc. but may be configured more complex, adding other living body organs. Also, the training apparatus 10 is not limited to the PTCA training, and needless to say, may be configured for performing trainings of various kinds of treatment. In short, the simulated body 16 only has to include: an organ model simulating a living body organ (e.g., other blood vessel, bile duct, trachea, esophagus, urethra, stomach, intestines, liver, pancreas, kidney, etc.) which is to be a treating part in accordance with the training content; and a living body lumen model (guide tubing) through which the catheter can be delivered to the treating part.

Next, the structures (supply tube 46, discharge tube 48 and circulation unit 18) that allow the water W, namely the simulated blood, to flow to the simulated body 16 (blood vessel model 26 and heart model 28) will be described. In outline, the training apparatus 10 is configured to supply and discharge the water W to and from the simulated body 16, using the water W stored in the space 12. Accordingly, the supply tube 46 and the discharge tube 48 are disposed in the space 12 of the mannequin 14 so as to be submerged together with the simulated body 16 in the water W stored in the space 12, as illustrated in FIGS. 1 to 3.

The supply tube 46 (supply unit) is a tube to supply the water W to the simulated body 16, and includes a main tube 54 formed from a cut surface 14h of the femoral region 14f to the chest part of the mannequin 14, a heart supply tube 56 branched from one end portion of the main tube 54 and connected to the simulated heart 40, and an aorta supply tube 58 branched from the same end portion of the main tube 54 and connected to the aorta model 30. Inside the supply tube 46, a supply path 46a for supplying the water W is formed, and this supply path 46a allows the main tube 54, heart supply tube 56 and aorta supply tube 58 to communicate one another.

The other end portion of the main tube 54 is connected to a supply connector 60 disposed on the cut surface 14h of the femoral region 14f on the right side. The supply connector 60 is configured to introduce the water W from the outside of the mannequin 14. Therefore, for example, a check valve configured to direct the water W in a single direction (to the simulated body 16) may be disposed inside the supply connector 60. The supply tube 46 causes the water W to flow to the side of the chest part 14c from the side of the femoral region 14f of the mannequin 14 as the water W is supplied to the supply path 46a from a first circulation tube 68 (circulation unit 18) connected to the supply connector 60 and disposed outside the mannequin 14.

The heart supply tube 56 directly supplies the water W flowing through the supply path 46a to the flow chamber 50 by connecting the main tube 54 to the simulated heart 40. Further, the aorta supply tube 58 directly supplies the water W flowing through the supply path 46a to the aorta-side lumen 31 by connecting the main tube 54 to the aorta model 30.

On the other hand, the discharge tube 48 (discharge unit: discharge tubing) includes a discharge path 48a inside thereof, and is configured as a tube to discharge the water W from the simulated body 16. The discharge tube 48 includes a heart discharge tube 62 directly connected to the simulated heart 40, and two arterial discharge tubes 64, 64 branched from each of the left femoral arterial line 34b and the right femoral arterial line 34a.

One end portion of the heart discharge tube 62 is connected to the simulated heart 40, and the other end portion thereof is in a free state at a prescribed position of the mannequin 14 (inside the abdomen 14d), and discharges the water W inside the flow chamber 50 to the space 12 via the discharge path 48a. This heart discharge tube 62 has a length reaching a discharge connector 66 of a second circulation tube 70 inserted into the space 12 from the cut surface 14h of the femoral region 14f on the left side, and a connector 62a detachably connected to the discharge connector 66 is disposed at an end portion of the heart discharge tube 62.

The two arterial discharge tubes 64, 64 are formed simulating a right internal iliac artery and a left internal iliac artery inside the human body, and one end portion thereof is connected to the right femoral arterial line 34a or the left femoral arterial line 34b, and the other end portion thereof is in a free state inside the femoral region 14f. The arterial discharge tubes 64, 64 each include a function to discharge, to the space 12, the water W flowing through the aorta-side lumen 31 of the aorta model 30 as well as the arterial-side lumens 37 of the right femoral arterial line 34a and left femoral arterial line 34b.

Note that the structure configured to discharge the water W from the simulated body 16 to the space 12 (discharge unit) is not limited to the discharge tube 48, and it may be, for example, a hole of a prescribed size disposed on the aorta model 30, artery model 32, or simulated heart 40.

Further, the discharge connector 66 has a function to introduce the water W stored in the space 12 to the second circulation tube 70 and also to directly introduce the water W from the heart discharge tube 62 by being connected with the connector 62a depending on necessity. More specifically, the training apparatus 10 can discharge the water W to the circulation unit 18 outside the mannequin 14 via the discharge connector 66.

The circulation unit 18 includes the above-described first and second circulation tubes 68 and 70, a centrifugal pump 72 connected to these first and second circulation tubes 68 and 70, a pump controller 74 that controls drive of the centrifugal pump 72, a solenoid valve 76 (upstream-side valve) disposed on the halfway of the first circulation tube 68, and a solenoid valve controller 78 that controls drive of the solenoid valve 76.

The first circulation tube 68 is a supply tubing (tube forming the upstream of the water W circulation with respect to the simulated body 16), having one end portion connected to the supply connector 60 and the other end portion connected to an outflow section 72a of the centrifugal pump 72. A first circulation path 68a in which the water W flows is formed inside the first circulation tube 68. The second circulation tube 70 is a suction tubing (tube constituting the downstream of the water W circulation with respect to the simulated body 16) including a discharge connector 66 on one end portion inserted into the space 12 of the mannequin 14 by a prescribed length, while the other end portion thereof is connected to the inflow section 72b of the centrifugal pump 72. A second circulation path 70a where the water W flows is formed inside the second circulation tube 70.

The centrifugal pump 72 applies flow force to the water W, more specifically, has a function to suction the water W from the second circulation tube 70 via the inflow section 72b and push out the water W to the first circulation tube 68 via the outflow section 72a. The centrifugal pump 72 includes a cylindrical shape housing 73 housing the outflow section 72a and inflow section 72b, and a propeller not illustrated but rotating inside the housing 73. The outflow section 72a is a port disposed at an outer peripheral edge of the housing 73 and configured to discharge, to the first circulation tube 68, the water W having been pushed out to the peripheral edge, by centrifugal force of the propeller rotating inside the housing 73. The inflow section 72b is a port disposed in the center of the housing 73, and introduces (let in) the water W from the second circulation tube 70 into the housing 73, using negative pressure generated inside the housing 73 by the rotation of the propeller. Therefore, the centrifugal pump 72 may change a flow amount (discharging amount and introducing amount) of the water W based on the rotational speed of the propeller.

The pump controller 74 is electrically connected to the centrifugal pump 72 and controls the drive of the propeller. More specifically, in training apparatus 10, the flow amount of the water W circulating in the circulation unit 18 can be adjusted by the pump controller 74 and an appropriate amount of the water W is supplied to the simulated body 16.

The solenoid valve 76 includes a body portion 77 that connects between the upstream side and the downstream side of the first circulation tube 68, a solenoid not illustrated but disposed inside the body portion 77, and a movable portion not illustrated but actuated by magnetic force of the solenoid and further electrically connected to the solenoid valve controller 78. The solenoid is excited at the timing when power is supplied from the solenoid valve controller 78. The movable portion is displaced under the effect of excitation of the solenoid, and opens and closes the first circulation path 68a of the first circulation tube 68.

The solenoid valve controller 78 supplies power pulse to the solenoid valve 76 at a prescribed cycle. The solenoid valve controller 78 may adjust the cycle of the power pulse, and outputs the power pulse repeating ON and OFF every second, for example. With this configuration, the movable portion of the solenoid valve 76 changes between open and close states every second to open and close the first circulation path 68a of the first circulation tube 68.

More specifically, the circulation unit 18 can temporarily block the water W by closing the first circulation path 68a with the solenoid valve 76 and allow the stored water W to flow by opening the first circulation path 68a. Therefore, the water W in the first circulation path 68a is supplied to the supply tube 46 as the flow amount of the water W changes (increases or decreases) with time. Thus, in the training apparatus 10, the water W having the water pressure changing in the same manner as the actual blood pressure can be supplied to the simulated body 16 via the supply tube 46.

For this reason, a pressure sensor 80 to detect the water pressure of the water W flowing inside is preferably provided in the simulated body 16. For instance, the pressure sensor 80 is connected to a connection tube 82 simulating a left common carotid artery inside the human body and coupled to the aorta model 30, and detects the water pressure of the water W flowing in the aorta model 30. The user can adjust the water W flow in a desirable manner by operating the pump controller 74 and the solenoid valve controller 78 based on the water pressure value detected by the pressure sensor 80. Note that the pump controller 74 and the solenoid valve controller 78 may be formed in one control unit 79 (computer: see a dotted line in FIG. 1). For example, the control unit 79 may be configured to automatically drive the centrifugal pump 72 and the solenoid valve 76 only by the user setting blood pressure. Further, it may be configured that the water flow amount is adjusted based on the detected value of the pressure sensor 80.

The circulation unit 18 thus configured is disposed on the operation table 20 together with the mannequin 14, and a frame 84 is disposed above the circulation unit as illustrated in FIG. 2. During the training, various devices inside the circulation unit 18 are protected because the cover is put over the frame 84 and the mannequin 14.

Additionally, in the training apparatus 10, the training is performed with the use of an X-ray photography system 86. More specifically, during the training, X-ray transmission images (radiographic image: moving image) of the simulated body 16 and the mannequin 14 covered with the cover are sequentially acquired by the X-ray photography system 86. Accordingly, the user may deliver the catheter, confirming the X-ray transmission images, and execute the PTCA treatment. As a result, the user achieves to perform the catheter procedure training close to reality.

The X-ray photography system 86 includes an X-ray detection device 90 disposed between an X-ray source 88 (radiation source) disposed above the operation table 20 and the operation table 20 of the mannequin 14, a control device 92 connected to the X-ray source 88 and the X-ray detection device 90, and a monitor 94 connected to the control device 92. The X-ray source 88 successively irradiates the mannequin 14 with the X-ray having a prescribed dose (irradiation energy amount) under the control of the control device 92. The X-ray emitted from the X-ray source 88 passes the mannequin 14 and the simulated body 16 where the water W is stored, and then enters the X-ray detection device 90. Note that the X-ray irradiation range is preferably set from the chest part 14c to the abdomen 14d of the mannequin 14 such that the X-ray does not reach the user's working position and the circulation unit 18. By thus setting, radiation exposure to the user and effect on the circulation unit 18 can be reduced.

The X-ray detection device 90 sequentially processes the successively entering X-ray and acquires X-ray transmission images (moving images). An example of the X-ray detection device 90 is an electronic cassette, whereby image information according to the X-ray can be obtained by changing the X-ray to visible light and receiving the visible light. The X-ray transmission images (X-ray transmission image information: electrical signal) acquired by the X-ray detection device 90 are sequentially sent to the control device 92.

The control device 92 is formed of, for example, a known computer and has a function to control the X-ray source 88 and the X-ray detection device 90. The X-ray photography system 86 emits the X-ray from the X-ray source 88 under the control of the control device 92, and acquires the X-ray transmission images based on the X-ray passing the simulated body 16 and the mannequin 14, and then displays the X-ray transmission images on the monitor 94. In this manner, the user can perform the catheter procedure training, confirming the X-ray transmission images displayed on the monitor 94.

The training apparatus 10 according to the present embodiment is basically configured as described above. Now, functions and effects thereof will be described below.

In the case where the PTCA training is performed with the training apparatus 10, the training apparatus 10 is placed on the operation table 20 together with the mannequin 14 including the space 12 containing the simulated body 16, supply tube 46 and discharge tube 48, and the circulation unit 18, as illustrated in FIG. 2. Note that the circulation unit 18 (particularly, pump controller 74 and solenoid valve controller 78) may be arranged in a place separate from the operation table 20. The water W may flow smoothly by disposing the mannequin 14 and the circulation unit 18 at the same height.

At this point, the supply tube 46 is connected to the supply connector 60 of the mannequin 14 while the connector 62a of the heart discharge tube 62 is not connected to the discharge connector 66 and stays in the space 12 in a free state. Further, in the treating part of the catheter (e.g., left coronary arterial line 44 of heart model 28), a constriction α is preliminarily formed for the training, for example, by blocking the communication passage 44b with a tube bent or some stuffing inserted.

After placing the mannequin 14, the water W is charged into the space 12 through the opening 22 of the mannequin 14. Thus, the space 12 is filled with a sufficient amount of the water W, and then the simulated body 16, supply tube 46 and discharge tube 48 are submerged in the water. Note that, when the water W is stored in the space 12, the insides of the simulated body 16, supply tube 46 and discharge tube 48 are respectively filled with the water W by driving the centrifugal pump 72 so that the simulated body 16, the supply tube 46, and discharge tube 48 may be smoothly submerged in the water W.

After completion of the above preparation, the surgical cover is put over the mannequin 14 and circulation unit 18 so that the environment same as the actual catheter procedure is established. After that, as illustrated in FIG. 4, the water W stored in the mannequin 14 is circulated by actuating the circulation unit 18 in accordance with the user's operations. The circulation unit 18 drives the propeller of the centrifugal pump 72 with the pump controller 74 and generates negative pressure in the second circulation path 70a of the second circulation tube 70. This allows the second circulation tube 70 to suction the water W stored inside the mannequin 14 via the discharge connector 66 to the second circulation path 70a to guide the water W to the centrifugal pump 72. In the centrifugal pump 72, the water W having entered a center portion of the housing 73 from the second circulation tube 70 via the inflow section 72b flows outside by centrifugal force of the propeller. Accordingly, the water W having sufficient force is pushed out to the first circulation path 68a of the first circulation tube 68 via the outflow section 72a.

The water W having flown from the centrifugal pump 72 to the first circulation tube 68 passes the first circulation path 68a and flows through the supply tube 46. At this point, the solenoid valve 76 connected to the first circulation tube 68 is actuated by the solenoid valve controller 78 to cyclically open and close the first circulation path 68a, thereby changing the flow amount of the water W. Consequently, the water W that has the changed flow amount is supplied to the main tube 54 (supply tube 46) connected to the first circulation tube 68 via supply connector 60.

The water W having flown to the supply tube 46 passes the main tube 54 and flows to the chest part 14c, and a part of the water W is directly supplied to the flow chamber 50 of the simulated heart 40 from the heart supply tube 56. This allows the simulated heart 40 to pulsate. More specifically, when a large amount of the water W is supplied from the heart supply tube 56, the water W is stored in the flow chamber 50 and the inner pressure thereof is increased, and the simulated heart 40 expands outward with the increased inner pressure. Also, when a small amount of the water W is supplied to the heart supply tube 56, the inner pressure of the flow chamber 50 is reduced, and the simulated heart 40 contracts inward with the reduced inner pressure. Thus, when the flow amount (supply amount) of the water W is changed, the simulated heart 40 cyclically expands and contracts repeatedly, simulating the actual pulsation of the heart.

The water W supplied to the simulated heart 40 is circulated inside the flow chamber 50, and guided to the discharge path 48a of the heart discharge tube 62 connected to the flow chamber 50. The water W having flown to the discharge path 48a flows to the end portion of the heart discharge tube 62 and is discharged from the end portion to the space 12 (storage unit for the water W).

On the other hand, the water W that has not flown into the simulated heart 40 and flows from the main tube 54 to the aorta supply tube 58 flows into the aorta-side lumen 31 of the aorta model 30. A part of the water W flows to the flow chamber 50 of the simulated heart 40 via the right coronary arterial line 42 and left coronary arterial line 44, while most of the water W passes the aorta-side lumen 31 and flows to the arterial-side lumen 37. More specifically, the water W flows to the right femoral arterial line 34a, left femoral arterial line 34b, right brachial arterial line 36a, and left brachial arterial line 36b connected to the aorta model 30. Further, the water W having flown to the right femoral arterial line 34a and left femoral arterial line 34b flows to the arterial discharge tube 64 and is discharged from the end portion of the arterial discharge tube 64 to the space 12. Thus, in the training apparatus 10, the water W of the mannequin 14 can be smoothly circulated to the inside of the simulated body 16.

In the case of performing the catheter procedure training, the user inserts the catheter, for example, into the arterial-side lumen 37 from the insertion terminal 38 of the right femoral arterial line 34a exposed from the femoral region of the mannequin 14. While the training of catheter insertion is performed, the X-ray photography system 86 is used to acquire the X-ray transmission images of the mannequin 14, simulated body 16 and the catheter, and the images of the catheter and the simulated body 16 are displayed on the monitor 94.

At this point, the water W is stored in both the space 12 and simulated body 16 of the mannequin 14 in the training apparatus 10, and the water W flows inside the simulated body 16. In this manner, distribution of the water W inside the mannequin 14 is made substantially uniform. Therefore, the simulated body 16 on the X-ray transmission image acquired by the X-ray photography system 86 is displayed suitably indistinct. In other words, the X-ray transmission image having the visibility substantially same as that acquired at the time of performing the actual catheter procedure is displayed on the monitor 94.

The user operates the catheter while confirming the monitor 94, and delivers a tip of the catheter to the constriction α at the left coronary arterial line 44. During this time, contrast medium (used subject) is discharged from the catheter in order to grasp a current position of the catheter. As a result, the portion from where the contrast medium is discharged is displayed relatively distinct on the monitor 94 (X-ray transmission image).

Here, in the case of the related art, when the catheter procedure training is continuously performed using contrast medium, an unfavorable condition occurs in which the contrast medium is stacked inside the aorta-side lumen and arterial side lumen, and the simulated body is displayed distinctly. However, in the training apparatus 10 according to the present embodiment, the water W flows inside the simulated body 16 and reaches the space 12 of the mannequin 14 relatively quickly from the discharge tube 48 (for discharging), and therefore the contrast medium can be easily thinned with the stored water W. Also, contrast property is uniformed between the water W in the space 12 and the water W in the simulated body 16. Accordingly, even when the catheter procedure training is continuously performed, effect of the contrast medium given on the simulated body 16 can be highly reduced.

As described above, in the training apparatus 10 according to the present embodiment, the space 12 of the mannequin 14 stores the water W and contains the simulated body 16, and further the water W is circulated by the circulation unit 18, thereby easily configuring the environment close to the interventional procedure. With this configuration, preparation and cleanup associated with the training can be effectively performed in the training apparatus 10.

Moreover, since the simulated body 16 is submerged in the water W stored in the space 12, the water W inside the space 12 containing the simulated body 16 can be distributed substantially uniform. Accordingly, the simulated body 16 is displayed indistinct same as the X-ray transmission image in the actual interventional procedure when the X-ray transmission image of the simulated body 16 is acquired, and the training closer to reality can be performed. Note that, in the training apparatus 10, an entire part of the simulated body 16 is not necessarily submerged in the water W, and of course, definition of the simulated body 16 projected on the X-ray transmission image can be suitably adjusted by changing the storage amount of the water W stored inside the mannequin 14.

Further, even when the X-ray contrast medium is discharged from the catheter inserted into the simulated body 16, the X-ray contrast medium can be immediately discharged to space 12 via the discharge tube 48 of the simulated body 16. Therefore, the X-ray contrast medium remaining inside the simulated body 16 can be reduced and the training can be continuously performed. Of course, in the training apparatus 10, not only the X-ray contrast medium but also any used subject used in various types of training procedures can be discharged.

Furthermore, since the circulation unit 18 outside the mannequin 14 includes the second circulation tube 70 and the centrifugal pump 72, the water W stored inside the mannequin 14 can be smoothly circulated outside the mannequin 14. Note that the circulation unit 18 may be disposed inside the space 12 of the mannequin 14, thereby saving more space. By the way, in the case where the heart model is configured to pulsate, a reservoir for storing the water W is generally required in a separate place; however, in this training apparatus 10, the mannequin 14 can be substituted for the reservoir, thereby simplifying the apparatus structure.

Additionally, the heart discharge tube 62 can be connected to the discharge connector 66 (i.e., second circulation tube 70) of the mannequin 14. By thus connecting the heart discharge tube 62 to the discharge connector 66, the water W can be smoothly introduced into the second circulation tube 70 when necessary during the training.

Moreover, since the mannequin 14 is made transparent (or translucent), the position of the catheter can be visually confirmed when the training is performed without the cover. Therefore, the user can perform versatile training, using the training apparatus 10. Also, since the mannequin 14 has an opening 22 on the upper surface thereof, the liquid can be stored in the space 12 through the opening 22, and also air contained inside the space 12 and the simulated body 16 can be discharged through opening 22.

As described above, the user can perform the training close to reality and successfully master (improve) the interventional procedure with the use of the training apparatus 10. Note that the configuration of the training apparatus 10 is not limited to the above-described embodiment, and needless to say, various modifications can be made in the configuration. In the following, a modified embodiment of the training apparatus will be described. However, description regarding components or functions same as those described for the training apparatus 10 in the present embodiment will be omitted below, denoting such components or functions by the same reference symbols.

### [Modified Embodiment]

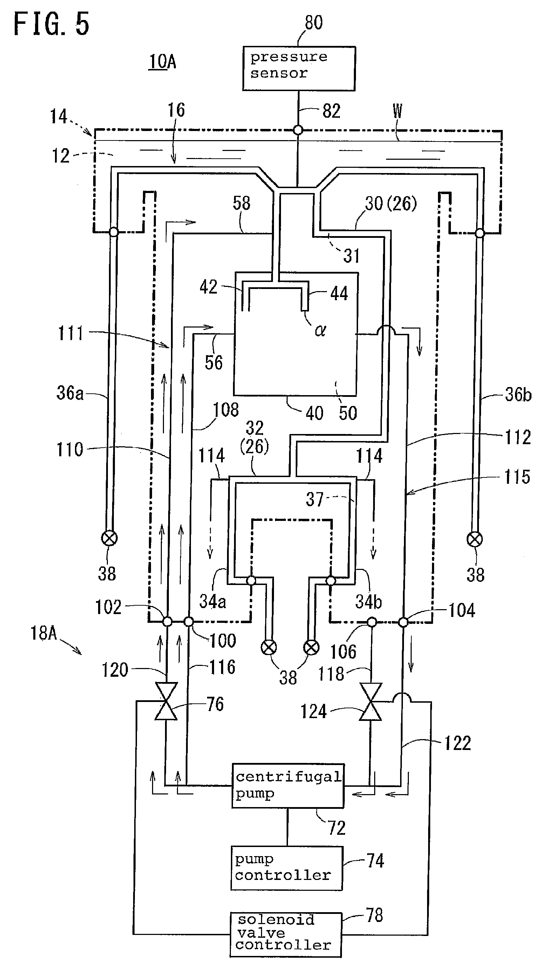

The training apparatus 10A according to a modified embodiment is configured to have a different water W circulation route from the training apparatus 10 according to the present embodiment, as illustrated in FIG. 5. More specifically, a mannequin 14 includes two supply connectors 100 and 102 and two discharge connectors 104 and 106. Further, a supply tube 111 includes a heart supply tube 108 which directly connects a supply connector 100 to a simulated heart 40, and an aorta supply tube 110 which directly connects a supply connector 102 to an aorta model 30. Also, a discharge tube 115 includes a heart discharge tube 112 which directly connects a discharge connector 104 to the simulated heart 40, and two artery discharge tubes 114, 114 having end portions being in a free state in a space 12. Since the discharge connector 106 is exposed to the space 12 of the mannequin 14, the water W inside the mannequin 14 can communicate with the circulation unit 18A.

The circulation unit 18A includes a first circulation tube 116 connected to the supply connector 100, a second circulation tube 118 connected to the discharge connector 106, a third circulation tube 120 connected to the supply connector 102, and a fourth circulation tube 122 connected to the discharge connector 104. The first and third circulation tubes 116 and 120 are interconnected on the halfway position to be connected to an outflow section 72a of a centrifugal pump 72, and the second and fourth circulation tubes 118 and 122 are interconnected on the halfway position to be connected to an inflow section 72b of the centrifugal pump 72. A solenoid valve 76 is disposed on the halfway position of the third circulation tube 120.

Additionally, the training apparatus 10A according to the modified embodiment is configured to include a solenoid valve 124 (downstream-side valve) used for discharge, disposed on the second circulation tube 118. The solenoid valve 124 is connected to a solenoid valve controller 78, and opens and closes a second circulation route (not illustrated) inside the second circulation tube 118 based on power pulse from the solenoid valve controller 78.

Next, the water W circulation in the training apparatus 10A having the above-described configuration will be described. The water W flowing out from the outflow section 72a of the centrifugal pump 72 is divided into two routes: the water W passing the first circulation tube 116 and the water W passing the third circulation tube 120. The flow amount of the water W passing the third circulation tube 120 is changed by the action of the solenoid valve 76, and the water W with the changed flow amount is supplied to an aorta-side lumen 31 of the aorta model 30 via the aorta supply tube 110. The flow amount of the water W passing the first circulation tube 116 is supplied to a flow chamber 50 of the simulated heart 40 via the heart supply tube 108 without much change in the flow amount.

On the other hand, the second circulation tube 118 suctions the water W stored inside the mannequin 14 under the sucking action of the centrifugal pump 72. Since the fourth circulation tube 122 is connected to the heart discharge tube 112 via the discharge connector 104, the fourth circulation tube 122 directly suctions the water W having flown to the flow chamber 50.

Here, the solenoid valve 124 disposed on the second circulation tube 118 is opened and closed by the solenoid valve controller 78 in a phase different from the solenoid valve 76 disposed in the third circulation tube 120. More specifically, the solenoid valve 124 is configured to close when the solenoid valve 76 is opened, and the solenoid valve 124 is configured to open when the solenoid valve 76 is closed. As a result, when the water W flows to the aorta-side lumen 31 of the aorta model 30 from the third circulation tube 120 while the solenoid valve 76 is opened, the water W flowing to the second circulation tube 118 can be blocked by changing the solenoid valve 124 to the close state, and thus the simulated heart 40 may expand. In contrast, when the water W flowing in the third circulation tube 120 is reduced while the solenoid valve 76 is closed, the blocked water W can be smoothly discharged from the second circulation tube 118 by changing the solenoid valve 124 to the open state, and thus the simulated heart 40 may smoothly expand and contract.

Therefore, in the training apparatus 10A according to the modified embodiment, the simulated heart 40 may pulsate more stably based on the flow amount of the water W because the solenoid valves 76 and 124 are disposed on the circulation routes where the water W is supplied to or discharged from the simulated heart 40. With this structure, the user can successfully master (improve) the catheter procedure because the state closer to reality is achieved in the simulated body 16.

While the preferred embodiments of the present invention have been described above, the embodiments of the present invention are not limited to thereto. Needless to mention, various modifications may be made without departing from the scope of the present technology. For example, the liquid remaining in the space 12 of the mannequin 14 (namely the liquid flowing inside the simulated body 16) is not limited to the water W. In this case, the environment can be made closer to reality by using the liquid having viscosity close to the actual blood.

## Claims

1. A training apparatus (10), comprising:
a simulated human body part (16) including a blood vessel model simulating blood vessels inside the simulated human body part through which a catheter can be delivered, and a treating part (28) simulating a heart inside the simulated human body part and connected to the blood vessel model to be treated by the catheter;
a supply unit (46) configured to supply liquid to the simulated human body part (16) ; a container which is simulating a part or the entirety of the remaining parts of said simulated human body part (16) and is capable of storing the liquid and including a space;
a circulation unit (18) configured to circulate the liquid inside the space and supply the liquid to the supply unit (46),
**characterized by**
the container being configured to contain at least a part of the simulated human body part submerged in the liquid;
a discharge unit (48) configured to discharge the liquid from the simulated human body part (16) to the space of the container.

2. The training apparatus (10) according to claim 1, wherein the circulation unit (18) includes an upstream-side valve (76) configured to cyclically change a flow amount of the liquid to be supplied to the supply unit (46).

3. The training apparatus (10) according to claim 1 or 2, wherein the circulation unit (18) includes a suction tubing where the liquid inside the space or the liquid inside the discharge unit (48) can flow, and a pump connected to the suction tubing and configured to suction the liquid by applying negative pressure to the suction tubing (70) and supply the liquid to the supply unit (46).

4. The training apparatus (10) according to claim 3, wherein the circulation unit (18) includes a downstream-side valve (124) configured to cyclically change a flow amount of the liquid flowing in the suction tubing (70).

5. The training apparatus (10) according to claim 3 or 4, wherein the discharge unit (48) includes a discharge tubing directly connected to the simulated human body part (16), and the discharge tubing is detachably connected to the suction tubing.

6. The training apparatus (10) according to any one of claims 1 to 5, wherein the container is made transparent or translucent so that the simulated human body part (16) can be visually confirmed.

7. The training apparatus (10) according to claim 6, wherein the container includes an opening on an upper surface so that the space can communicate with outside via the opening in a placed state.

## Patentansprüche

1. Trainingsgerät (10), das Folgendes umfasst:
einen simulierten menschlichen Körperteil (16), der ein Blutgefäßmodell, das Blutgefäße innerhalb des simulierten menschlichen Körperteils, durch die ein Katheter zugeführt werden kann, simuliert, und einen Behandlungsteil (28), der ein Herz innerhalb des simulierten menschlichen Körperteils simuliert und mit dem durch den Katheter zu behandelnden Blutgefäßmodell verbunden ist, einschließt;
eine Zufuhreinheit (46), die dafür konfiguriert ist, dem simulierten menschlichen Körperteil (16) Flüssigkeit zuzuführen;
einen Behälter, der einen Teil oder die Gesamtheit der verbleibenden Teile des simulierten menschlichen Körperteils (16) simuliert und dazu in der Lage ist, die Flüssigkeit zu speichern und einen Raum einschließt;
eine Umwälzungseinheit (18), die dafür konfiguriert ist, die Flüssigkeit innerhalb des Raumes umzuwälzen und die Flüssigkeit der Zufuhreinheit (46) zuzuführen,
**dadurch gekennzeichnet, dass**
der Behälter dafür konfiguriert ist, wenigstens einen Teil des simulierten menschlichen Körperteils in der Flüssigkeit untergetaucht zu enthalten;
eine Abgabeeinheit (48), die dafür konfiguriert ist, die Flüssigkeit von dem simulierten menschlichen Körperteil (16) zu dem Raum des Behälters abzugeben.

2. Trainingsgerät (10) nach Anspruch 1, wobei die Umwälzungseinheit (18) ein stromaufseitiges Ventil (76) einschließt, das dafür konfiguriert ist, zyklisch eine Strömungsmenge der Flüssigkeit, die der Zufuhreinheit (46) zuzuführen ist, zu verändern.

3. Trainingsgerät (10) nach Anspruch 1 oder 2, wobei die Umwälzungseinheit (18) eine Saugröhre, wo die Flüssigkeit innerhalb des Raumes oder die Flüssigkeit innerhalb der Abgabeeinheit (48) strömen kann, und eine Pumpe, die mit der Saugröhre verbunden und dafür konfiguriert ist, die Flüssigkeit durch das Anlegen von Unterdruck an die Saugröhre (70) anzusaugen und die Flüssigkeit der Zufuhreinheit (46) zuzuführen, einschließt.

4. Trainingsgerät (10) nach Anspruch 3, wobei die Umwälzungseinheit (18) ein stromabseitiges Ventil (124) einschließt, das dafür konfiguriert ist, zyklisch eine Strömungsmenge der Flüssigkeit, die in der Saugröhre (70) strömt, zu verändern.

5. Trainingsgerät (10) nach Anspruch 3 oder 4, wobei die Abgabeeinheit (48) eine Abgaberöhre einschließt, die unmittelbar mit dem simulierten menschlichen Körperteil (16) verbunden ist, und die Abgaberöhre trennbar mit der Saugröhre verbunden ist.

6. Trainingsgerät (10) nach einem der Ansprüche 1 bis 5, wobei der Behälter durchscheinend oder durchsichtig hergestellt ist, so dass der simulierte menschliche Körperteil (16) visuell bestätigt werden kann.

7. Trainingsgerät (10) nach Anspruch 6, wobei der Behälter eine Öffnung an einer oberen Fläche einschließt, so dass der Raum in einem aufgestellten Zustand über eine Öffnung mit der Außenseite in Verbindung stehen kann.

## Revendications

1. Appareil d'entraînement (10), comprenant :
une partie de corps humain simulée (16) comprenant un modèle de vaisseau sanguin simulant des vaisseaux sanguins à l'intérieur de la partie de corps humain simulée à travers laquelle un cathéter peut être introduit, et une partie de traitement (28) simulant un coeur à l'intérieur de la partie de corps humain simulée et reliée au modèle de vaisseau sanguin devant être traité par le cathéter ;
une unité d'alimentation (46) conçue pour alimenter en liquide la partie de corps humain simulée (16) ;
un contenant qui simule une partie ou la totalité des parties restantes de ladite partie de corps humain simulée (16) et est apte à stocker le liquide et comporte un espace ;
une unité de circulation (18) conçue pour faire circuler le liquide à l'intérieur de l'espace et amener le liquide à l'unité d'alimentation (46),
**caractérisé en ce que**
le contenant est conçu pour contenir au moins une partie de la partie de corps humain simulée immergée dans le liquide ;
une unité de décharge (48) conçue pour faire passer le liquide de la partie de corps humain simulée (16) dans l'espace du contenant.

2. Appareil d'entraînement (10) selon la revendication 1, dans lequel l'unité de circulation (18) comprend un clapet côté amont (76) conçu pour changer de façon cyclique un débit d'écoulement du liquide devant être amené à l'unité d'alimentation (46).

3. Appareil d'entraînement (10) selon la revendication 1 ou 2, dans lequel l'unité de circulation (18) comprend une tubulure d'aspiration où le liquide présent à l'intérieur de l'espace ou le liquide présent à l'intérieur de l'unité de décharge (48) peut circuler, et une pompe reliée à la tubulure d'aspiration et conçue pour aspirer le liquide par l'application d'une pression négative à la tubulure d'aspiration (70) et amener le liquide à l'unité d'alimentation (46).

4. Appareil d'entraînement (10) selon la revendication 3, dans lequel l'unité de circulation (18) comprend un clapet côté aval (124) conçu pour changer de façon cyclique un débit d'écoulement du liquide circulant dans la tubulure d'aspiration (70).

5. Appareil d'entraînement (10) selon la revendication 3 ou 4, dans lequel l'unité de décharge (48) comprend une tubulure de décharge directement reliée à la partie de corps humain simulée (16), et la tubulure de décharge est reliée de façon détachable à la tubulure d'aspiration.

6. Appareil d'entraînement (10) selon l'une quelconque des revendications 1 à 5, dans lequel le contenant est transparent ou translucide de telle sorte que la partie de corps humain simulée (16) peut être visuellement confirmée.

7. Appareil d'entraînement (10) selon la revendication 6, dans lequel le contenant comporte une ouverture sur une face supérieure de sorte que l'espace peut communiquer avec l'extérieur via l'ouverture une fois mis en place.
